# EUROPEAN PATENT SPECIFICATION

(11) **EP 3 085 511 B1**
(45) Date of publication and mention of the grant of the patent: **28.08.2019**
(21) Application number: 16158413.1
(22) Date of filing: 03.03.2016
(51) Int. Cl.: B29C 45/28

(54) **INVERTED-TYPE HOT RUNNER SYSTEM**
INVERSES HEISSKANALSYSTEM
SYSTÈME DE CANAL CHAUFFANT ÉTAGÉ INVERSE

(30) Priority: 22.04.2015 CN 201520247800 U
(43) Date of publication of application: 26.10.2016
(73) Proprietor: Yudo (Suzhou) Hot Runner Systems Co., Ltd., Province Jiangsu (CN)
(72) Inventor: Lee, Sang Yeol, Suzhou City, Jiangsu Province (CN)
(74) Representative: dompatent von Kreisler Selting Werner - Partnerschaft von Patent- und Rechtsanwälten mbB

(56) References cited:
- EP-A2- 0 901 896
- EP-B1- 1 163 098
- JP-A- S6 384 913
- US-A1- 2003 012 845
- US-A1- 2006 147 577

## Description

### TECHNICAL FIELD

The present disclosure relates to a hot runner system, particularly to a hot runner system which is mounted in an inverted manner.

### BACKGROUND

A hot runner is a heating element integration which is used in an injection mold for injecting melted plastic into a mold cavity. A hot runner system usually consists of a hot nozzle, a spreader plate, a temperature control box and accessories sections etc. The mounting plate of existing hot runner system includes three boards. During mounting, a mating section of the hot nozzle flange and the mould is smeared with red lead, and then the hot nozzle is inserted into a hot nozzle frame of a bottom board. Then, a copper rod is used to knock till the hot nozzle flange is completely matchable with the mould. The hot nozzle is pulled out. By observing the red lead, it is possible to judge whether the mould frame meets requirements or not, especially the mating section of the hot nozzle and a seal surface of the mould. If no problem, after the above mounting steps, height between the flange and a base board is measured and data is recorded by point locations. After the hot nozzle is completely mounted and confirmed, whether it is necessary to mount a sealing ring and other accessories is assessed. After the hot nozzle is completely mounted, then the spreader plate will be mounted in flat and fixed by cross screws. Height between the spreader plate and the base board will be measured through multi-points. The spreader plate is required to be fixed in balance. A cover board will be finally mounted. A bottom surface of the cover board and an anti-knock pad block surface will be smeared with red lead. Then, the cover board is covered and knocked to be tightly fixed by a copper rod. The cover board will be elevated again by a travelling crane. By observing the imprint of the red lead, it is possible to judge whether the cover board tightly presses the spreader plate or not. After confirmation, the cover board is covered again and locked by screws.

However, the above hot runner system has following disadvantages: firstly, the mounting plate of the hot runner system used three boards, which is complex in manufacturing and difficult to guarantee precise dimensions due to error overlay of each board thickness; secondly, it is time-consuming for assembly and disassembly because of so many boards; thirdly, it is easy to leak when adopting a connection way of face-to-face pressure tight of the hot runner system; and fourthly, when replacing surface thermocouples of the hot runner system, it requires to disassembly the system board which will cause inconveniences maintenance. EP 0 901 896 A2 describes a coinjection molding system for injecting skin and core material into a mold cavity. The system includes a three position actuator for moving a valve pin into a closed position in which neither skin or core flow is permitted, a middle position in which only skin flow is permitted, and an open position in which skin and core flow is permitted. From EP 1 163 098 B1 and from Document JP S63 84913 A (NISSEI PLASTICS IND CO; 1988-04-15) other injection molding apparatuses are known.

### SUMMARY

An object of the present embodiment is to provide an inverted-type hot runner system with a simple structure and easily to be mounted.

In order to achieve the above object, the present embodiment provides an inverted-type hot runner system in accordance with appended claim 1.

Preferably, the spreader-plate mounting slot includes therein an anti-rotating pin, and the spreader plate includes a plug hole corresponding to the anti-rotating pin.

Preferably, a centering ring is provided between the main nozzle head and the runner.

Preferably, the spreader plate is connected to the mounting plate through a bolt.

Preferably, the hot nozzle and the spreader plate are connected via threaded connection.

Preferably, the spreader plate includes a thermocouple located at a bottom of the spreader plate.

Preferably, the cylinder is connected to a magnetic valve through a high temperature ventilation hose.

Preferably, the high temperature ventilation hose is connected to the magnetic valve and the cylinder through quick couplings.

In comparison with prior art, the hot runner system of the present application only uses a single mounting plate to mount the spreader plate, the hot nozzle, the cylinder and the main nozzle head, which effectively simplifies the structure of the hot runner system and makes it easier and quicker to mount the mounting plate in order to improve manufacture efficiency. By the fixing board of the hot runner system adopts a single mounting plate, error generated by board overlay can be reduced. Besides, by reducing the board quantity, it is possible to reduce processing, packaging and transportation costs. Meanwhile, by adopting such kind of hot runner system, it is convenient for assembly and disassembly, and for servicing the hot runner system as well.

### BRIEF DESCRIPTION OF THE DRAWING

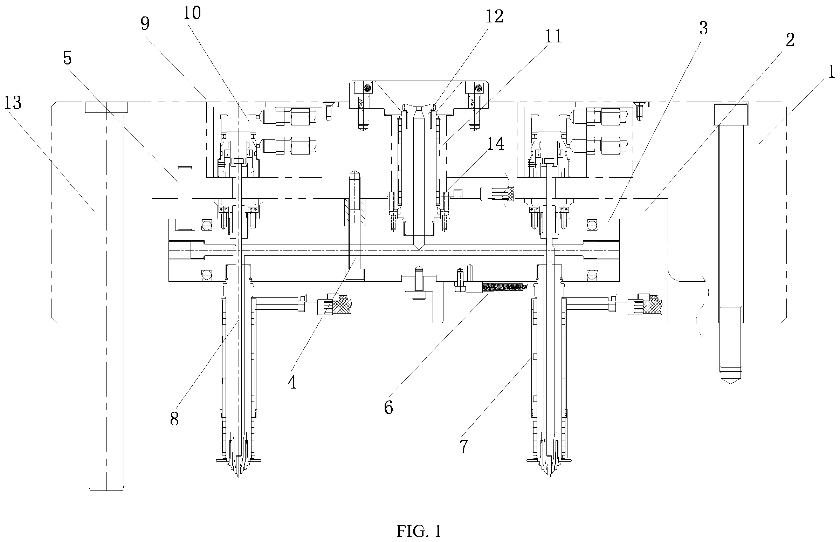

FIG. 1 is a structural schematic view in accordance with an illustrated embodiment of the present disclosure.

### component numeral description:

1. mounting plate; 2. spreader-plate mounting slot; 3. spreader plate; 4. bolt; 5. anti-rotating pin; 6. thermocouple; 7. hot nozzle; 8. needle; 9. cylinder mounting slot; 10. cylinder; 11. main-nozzle-head mounting slot; 12. main nozzle head; 13. mould fixing screw; 14. centering ring.

### ILLUSTRATED EMBODIMENT

Detailed description of the present application will be depicted in combination with embodiments shown in figures. Other advantages and function can be easily understood to those of ordinary skill in the art according to the disclosure of the present application.

Referring to FIG. 1, it is noted that structure, proportion, size and so on shown in the figure are only for illustrating the content of the present application. It should be noted that the present application should not be restricted to the embodiment, and modifications of structure, method or function to those of ordinary skill in the art according to the embodiments are all included within the protection scope of the present application. Besides, terminologies used in the specification such as "top", "bottom", "left", "right", "middle", "a" and so on are convenient to describe the present application rather than limit the practical scope of the present application. Any change of relativeness or modification without essentially technical change should be deemed as the practical scope of the present application as well.

FIGS. 1, the present application discloses an inverted-type hot runner system including a mounting plate 1, a cylinder mounting slot 9 and a main-nozzle-head mounting slot 11 both formed on a front surface of the mounting plate 1, and a spreader-plate mounting slot 2 formed on a back surface of the mounting plate 1. The hot runner system is mounted in an inverted manner. When mounting, firstly the back surface of the mounting plate 1 will be arranged towards the top, and then a spreader plate 3 will be mounted in the spreader-plate mounting slot 2 and fixed by a bolt 4. The spreader plate 3 defines a hot runner. In order for accurate positioning, the spreader-plate mounting slot 2 includes therein an anti-rotating pin 5, and at the same time, the spreader plate 3 includes a plug hole corresponding to the anti-rotating pin 5. In mounting, the anti-rotating pin 5 can be directly inserted into the plug hole so that precise positioning of the spreader plate 3 can be achieved.

When mounting the spreader plate 3, a hot nozzle 7 is mounted to the spreader plate 3. The hot nozzle 7 includes a needle 8. The hot nozzle 7 and the spreader plate 3 are connected via threaded connection, which can effectively avoid leakage. The spreader plate 3 further includes a thermocouple 6. The thermocouple 6 is located at the bottom of the spreader plate 3, which is convenient for servicing the spreader plate 3 and the thermocouple 6. In order for easy fixation, the mounting plate 1 further has a mould fixing screw 13.

After the spreader plate 3 is completely mounted, the mounting plate 1 is turned over. Then, a main nozzle head 12 will be mounted in the main-nozzle-head mounting slot 11. The main nozzle head 12 should be in communication with the runner of the spreader plate. In order for easily positioning, a centering ring 14 is provided between the main nozzle head 12 and the runner. A cylinder 10 is mounted to the cylinder mounting slot 9 which should be corresponding to the position of the hot nozzle 7. The cylinder 10 is connected with the needle 8 of the hot nozzle 7. The cylinder 10 is capable of driving the needle 8 to be opened or closed. The cylinder 10 is connected to a magnetic valve through a high temperature ventilation hose. The high temperature ventilation hose is connected to the magnetic valve and the cylinder 10 through quick couplings, which is easier for replace the high temperature ventilation hose. Besides, by adopting this structure, there is no need to process air passages on the mounting plate 1 anymore, which is easier to process the mounting plate 1, has no precision requirement, and can reduce the cost of the mounting plate 1.

The hot runner system of the present application only uses a single mounting plate to mount the spreader plate, the hot nozzle, the cylinder and the main nozzle head, which effectively simplifies the structure of the hot runner system and makes it easier and quicker to mount the mounting plate in order to improve manufacture efficiency. By the fixing board of the hot runner system adopts a single mounting plate, error generated by board overlay can be reduced. Besides, by reducing the board quantity, it is possible to reduce processing, packaging and transportation costs. Meanwhile, by adopting such kind of hot runner system, it is convenient for assembly and disassembly, and for servicing the hot runner system as well. Therefore, the present application effectively overcomes a lot of disadvantages of the existing technology, thus having high value industrialization.

## Claims

1. An inverted-type hot runner system comprising a spreader plate (3), the spreader plate (3) defining a runner therein, the spreader plate (3) comprising a hot nozzle (7), wherein the hot runner system comprises a mounting plate (1), a spreader-plate mounting slot (2) being formed on a back surface of the mounting plate (1), a cylinder mounting slot (9) and a main-nozzle-head mounting slot (11) being formed on a front surface of the mounting plate (1), , the main nozzle head (12) being in communication with the runner, a position of the cylinder mounting slot (9) being corresponding to a position of the hot nozzle (7), a cylinder (10) being mounted in the cylinder mounting slot (9), the cylinder (10) being connected with a needle (8) of the hot nozzle (7),
and wherein the mounting plate (1) is a single mounting plate (1),
**characterized in that**
the spreader plate (3) being fixed in the spreader-plate mounting slot (11), and
the main nozzle head (12) being mounted in the main-nozzle head mounting slot (11),
wherein the spreader plate (3), the nozzle (7), the cylinder (10) and the main nozzle head (1) are mounted to the single mounting plate (1).

2. The inverted-type hot runner system as claimed in claim 1, **characterized in that** the spreader-plate mounting slot (2) comprises therein an anti-rotating pin (5), and the spreader plate (3) comprises a plug hole corresponding to the anti-rotating pin (5).

3. The inverted-type hot runner system as claimed in claim 1, **characterized in that** a centering ring (14) is provided between the main nozzle head (12) and the runner.

4. The inverted-type hot runner system as claimed in claim 1, **characterized in that** the spreader plate (3) is connected to the mounting plate (1) through a bolt (4).

5. The inverted-type hot runner system as claimed in claim 1, **characterized in that** the hot nozzle (7) and the spreader plate (3) are connected via threaded connection.

6. The inverted-type hot runner system as claimed in claim 1, **characterized in that** the spreader plate (3) comprises a thermocouple (6) located at a bottom of the spreader plate (3).

7. The inverted-type hot runner system as claimed in claim 1, **characterized in that** the cylinder (10) is connected to a magnetic valve through a high temperature ventilation hose.

8. The inverted-type hot runner system as claimed in claim 7, **characterized in that** the high temperature ventilation hose is connected to the magnetic valve and the cylinder (10) through quick couplings.

## Patentansprüche

1. Inverses Heißkanalsystem mit einer Verteilerplatte (3), wobei die Verteilerplatte (3) einen Kanal darin ausbildet, wobei die Verteilerplatte (3) eine Heißdüse (7) aufweist, wobei das Heißkanalsystem eine Befestigungsplatte (1) aufweist, einen Verteilerplatten-Befestigungsfreiraum (2), der auf einer hinteren Fläche der Befestigungsplatte (1) ausgebildet ist, einen Zylinder-Befestigungsfreiraum (9) und einen Hauptdüsenkopf-Befestigungsfreiraum (11), der auf einer vorderen Fläche der Befestigungsplatte (1) ausgebildet ist, wobei der Hauptdüsenkopf (12) mit dem Kanal in Verbindung ist, eine Position des Zylinder-Befestigungsfreiraums (9) einer Position der Heißdüse (7) entspricht, ein Zylinder (10) in dem Zylinder-Befestigungsfreiraum (9) befestigt ist, wobei der Zylinder (10) mit einer Nadel (8) der Heißdüse (7) verbunden ist,
und wobei die Befestigungsplatte (1) eine Einzelbefestigungsplatte (1) ist,
**dadurch gekennzeichnet, dass**
die Verteilerplatte (3) in dem Verteilerplatten-Befestigungsfreiraum (2) fixiert ist, und
der Hauptdüsenkopf (12) in dem Hauptdüsenkopf-Befestigungsfreiraum (11) befestigt ist,
wobei die Verteilerplatte (3), die Düse (7), der Zylinder (10) und der Hauptdüsenkopf (12) auf der Einzelbefestigungsplatte (1) befestigt sind.

2. Inverses Heißkanalsystem nach Anspruch 1, **dadurch gekennzeichnet, dass** der Verteilerplatten-Befestigungsfreiraum (2) darin einen Verdrehsicherungsstift (5) aufweist und die Verteilerplatte (3) ein für den Verdrehsicherungsstift (5) passendes Einsteckloch aufweist.

3. Inverses Heißkanalsystem nach Anspruch 1, **dadurch gekennzeichnet, dass** ein Zentrierring (14) zwischen dem Hauptdüsenkopf (12) und dem Kanal vorgesehen ist.

4. Inverses Heißkanalsystem nach Anspruch 1, **dadurch gekennzeichnet, dass** die Verteilerplatte (3) mittels eines Bolzens (4) mit der Befestigungsplatte (1) verbunden ist.

5. Inverses Heißkanalsystem nach Anspruch 1, **dadurch gekennzeichnet, dass** die Heißdüse (7) und die Verteilplatte (3) mittels einer Gewindeverbindung verbunden sind.

6. Inverses Heißkanalsystem nach Anspruch 1, **dadurch gekennzeichnet, dass** die Verteilerplatte (3) ein Thermoelement (6) aufweist, dass sich an einer Unterseite der Verteilerplatte (3) befindet.

7. Inverses Heißkanalsystem nach Anspruch 1, **dadurch gekennzeichnet, dass** der Zylinder (10) über einen Hochtemperatur-Lüftungsschlauch mit einem Magnetventil verbunden ist.

8. Inverses Heißkanalsystem nach Anspruch 7, **dadurch gekennzeichnet, dass** der Hochtemperatur-Lüftungsschlauch über Schnellkupplungen mit dem Magnetventil und dem Zylinder (10) verbunden ist.

## Revendications

1. Système de canal chauffant de type inversé comprenant une plaque de répartition (3), la plaque de répartition (3) définissant un canal à l'intérieur, la plaque de répartition (3) comprenant une tuyère chauffée (7), dans lequel le système de canal chauffant comprend une plaque de montage (1), une fente de montage de plaque de répartition (2) étant formée sur une surface arrière de la plaque de montage (1), une fente de montage de cylindre (9) et une fente de montage de tête de tuyère principale (11) étant formée sur une surface avant de la plaque de montage (1), la tête de tuyère principale (12) étant en communication avec le canal, une position de la fente de montage de cylindre (9) correspondant à une position de la tuyère chauffée (7), un cylindre (10) étant monté dans la fente de montage de cylindre (9), le cylindre (10) étant raccordé à une aiguille (8) de la tuyère chauffée (7),
et dans lequel la plaque de montage (1) est une plaque de montage unique (1),
**caractérisé en ce que**
la plaque de répartition (3) est fixée dans la fente de montage de plaque de répartition (11), et
la tête de tuyère principale (12) est montée dans la fente de montage de tête de tuyère principale (11),
dans lequel la plaque de répartition (3), la tuyère (7), le cylindre (10) et la tête de tuyère principale (1) sont montés sur la plaque de montage unique (1).

2. Système de canal chauffant de type inversé selon la revendication 1, **caractérisé en ce que** la fente de montage de plaque de répartition (2) comprend une goupille anti-rotative (5) à l'intérieur, et la plaque de répartition (3) comprend un trou de sonde correspondant à la goupille anti-rotative (5).

3. Système de canal chauffant de type inversé selon la revendication 1, **caractérisé en ce qu'**un anneau de centrage (14) est prévu entre la tête de tuyère principale (12) et le canal.

4. Système de canal chauffant de type inversé selon la revendication 1, **caractérisé en ce que** la plaque de répartition (3) est raccordée à la plaque de montage (1) par un boulon (4).

5. Système de canal chauffant de type inversé selon la revendication 1, **caractérisé en ce que** la tuyère chauffée (7) et la plaque de répartition (3) sont raccordées par un raccord fileté.

6. Système de canal chauffant de type inversé selon la revendication 1, **caractérisé en ce que** la plaque de répartition (3) comprend un thermocouple (6) situé au niveau d'un fond de la plaque de répartition (3).

7. Système de canal chauffant de type inversé selon la revendication 1, **caractérisé en ce que** le cylindre (10) est raccordé à une vanne magnétique par un tuyau flexible de ventilation haute température.

8. Système de canal chauffant de type inversé selon la revendication 7, **caractérisé en ce que** le tuyau flexible de ventilation haute température est raccordé à la vanne magnétique et au cylindre (10) par des raccords rapides.
